# EUROPÄISCHE PATENTSCHRIFT

(11) **EP 0 643 635 B1**
(45) Veröffentlichungstag und Bekanntmachung des Hinweises auf die Patenterteilung: **07.02.1996**
(21) Anmeldenummer: 92913855.0
(22) Anmeldetag: 26.06.1992
(51) Int. Cl.: B23D 35/00, B29D 30/46

(54) **GEGENMESSER**
COUNTER-BLADE
CONTRE-LAME

(43) Veröffentlichungstag der Anmeldung: 22.03.1995
(73) Patentinhaber: AICHELE, Wilhelm, D-74564 Crailsheim (DE)
(72) Erfinder: AICHELE, Wilhelm, D-74564 Crailsheim (DE)
(74) Vertreter: Hoeger, Stellrecht & Partner
(86) Internationale Anmeldenummer: EP9201441
(87) Internationale Veröffentlichungsnummer: WO9400262

(56) Entgegenhaltungen:
- EP-A- 0 318 659
- EP-A- 0 391 194
- DE-A- 2 743 258
- DE-A- 3 705 168
- DE-C- 307 727
- US-A- 2 738 842
- US-A- 4 414 874
- US-A- 5 010 795

## Beschreibung

Die Erfindung betrifft eine Schneidvorrichtung nach dem Oberbegriff des Patentanspruchs 1; siehe DE-C 307 727.

Derartige Gegenmesser werden in Schneidvorrichtungen zum Schneiden flächiger Werkstücke, insbesondere Stahlkord, wie er für die Herstellung von bekannten Stahlgürtelreifen verwendet wird, eingesetzt.

Beim Schneidvorgang wird das relativ zum Gegenmesser bewegliche Messer, welches häufig zwei, im Profil unter einem spitzen Winkel aneinandergrenzende Flächen aufweist, scherenartig am Gegenmesser entlangbewegt, wobei es mit einer zur Schneidkraft quer verlaufenden Anpreßkraft zum Gegenmesser hingedrückt wird, und durchtrennt dabei die flächigen Werkstücke, beispielsweise den Stahlkord. Mit einer derartigen Schneidvorrichtung sind etwa 30 000 bis 60 000 Schnitte möglich, bevor das Messer stumpf und für den Schneidvorgang unbrauchbar wird. Um weitere Schneidvorgänge zu ermöglichen, wird die quer zur Schneidkraft verlaufende Anpreßkraft, mit welcher das Messer zum Gegenmesser hingedrückt wird, kontinuierlich erhöht. Dadurch wird einerseits die Standzeit des Messers verlängert, aber andererseits wird das Messer schneller stumpf und unbrauchbar.

Aufgabe der Erfindung ist es, das Gegenmesser so auszubilden, daß seine Standzeit erhöht wird.

Die Aufgabe wird erfindungsgemäß dadurch gelöst, daß das Gegenmesser an seiner Schneidkante, gegen die das Messer von der querverlaufenden Anpresskraft hingedrücht wird, derart abgestumpft ist, daß es wenigstens drei jeweils unter Einschluß stumpfer Winkel aneinandergrenzende Flächen aufweist.

Vorteilhaft ist es, wenn das Gegenmesser im Bereich seiner stumpfen Schneidkante aus Hartmetall besteht.

Vorzugsweise weist der Winkel zwischen den beiden vom Werkstück entfernt liegenden Flächen an der Schneidkante des Gegenmessers einen Wert von ca. 100° bis ca. 180° auf.

Es ist vorteilhaft, wenn eine dem Werkstück direkt gegenüberliegende erste Fläche des Gegenmessers mit einer zum Werkstück am weitesten entfernt angeordneten weiteren Fläche einen Winkel von ca. 20° bis ca. 120° einschließt.

Es ist auch möglich, daß das Gegenmesser im Bereich seiner Schneidkante vier aneinandergrenzende Flächen aufweist, wobei die an die erste Fläche angrenzende zweite Fläche mit einer zur weiteren Fläche parallelen Fläche einen Winkel von ca. 2° bis ca. 80° und wobei die dritte, an die weitere Fläche angrenzende Fläche einen Winkel im Bereich von ca. 0° bis ca. 70° mit der zur weiteren Fläche parallelen Fläche bildet.

Möglich ist es auch, daß das Gegenmesser an seiner Schneidkante verrundet ist.

Die nachstehende Beschreibung von bevorzugten Ausführungsformen der Erfindung dient im Zusammenhang mit beiliegender Zeichnung der weiteren Erläuterung. Es zeigen:
- Figur 1: eine schematische Ansicht einer Schneidvorrichtung, welche ein erfindungsgemäßes Gegenmesser enthält;
- Figur 2: eine Profilansicht des Gegenmessers;
- Figur 3: eine Profilansicht einer abgewandelten Ausführungsform eines Gegenmessers und
- Figur 4: eine Profilansicht einer weiteren abgewandelten Ausführungsform eines Gegenmessers.

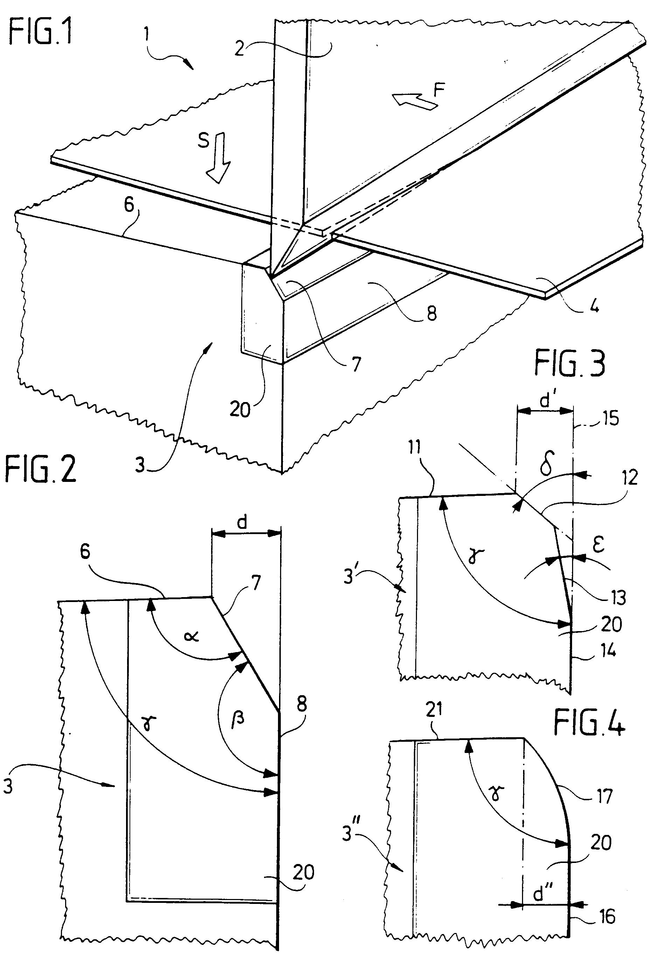

Eine in Figur 1 gezeigte Schneidvorrichtung 1 zum Schneiden flächiger, harter Werkstücke 4, z. B. Stahlkord für Kraftfahrzeugreifen, besteht im wesentlichen aus einem Messer 2 und einem Gegenmesser 3. Beim Schneidvorgang wird das Messer 2 scherenartig, einen spitzen Winkel mit der Schneidkante des Gegenmessers 3 und der Fläche des zu schneidenden Werkstücks 4 bildend, in Richtung des Pfeiles S bewegt, wobei es mit einer Kraft F zum Gegenmesser 3 hingedrückt wird. Dabei durchläuft der Schnittpunkt von Messer 2 und Gegenmesser 3 ein zu durchtrennendes Werkstück 4 längs der Schneidkante des Gegenmessers 3.

Figur 2 zeigt eine Profilansicht des Gegenmessers 3. Das Gegenmesser 3 ist an seiner Schneidkante dadurch abgestumpft, daß es jeweils unter Einschluß stumpfer Winkel α, β aneinandergrenzende Flächen 6, 7, 8 aufweist. Der zwischen den Flächen 7, 8 eingeschlossene stumpfe Winkel β hat vorzugsweise einen Wert von ca. 110° bis ca. 180°. Die dem Werkstück direkt gegenüberliegende erste Fläche 6 schließt mit der zum Werkstück am weitesten entfernt liegenden weiteren Fläche 8 einen Winkel γ von ca. 20° bis ca. 120° ein.

Wie aus Figur 3 hervorgeht, grenzen bei einer abgewandelten Ausführungsform des Gegenmessers 3' vier Flächen 11, 12, 13, 14 an der Schneidkante des Gegenmesser 3' aneinander, wobei jeweils zwei benachbarte Flächen einen stumpfen Winkel miteinander einschließen. Die Fläche 12 schließt mit einer zur Vertikalen parallel verlaufenden Fläche 15 (strichpunktiert gezeichnet) einen Winkel δ ein und die Fläche 13 schließt mit der zur Vertikalen parallel verlaufenden Fläche 15 einen Winkel ε ein. Der Wert des Winkels δ liegt im Bereich von ca. 2° bis ca. 85°, der des Winkels ε zwischen ca. 0° (vorzugsweise größer 0°) und ca. 70°. Wie bereits oben erwähnt, schließt die dem Werkstück direkt gegenüberliegende erste Fläche 11 mit der zur Vertikalen parallel verlaufenden weiteren Fläche 14 einen Winkel γ ein. Der Wert des Winkels γ liegt im Bereich von ca. 20° bis ca. 120°.

In Figur 4 ist eine weitere abgewandelte Ausführungsform eines Gegenmessers 3'' dargestellt, dessen abgestumpfte Schneidkante von einer Verrundung 17 gebildet wird. Die Verrundung 17 geht stetig in eine Fläche 21 sowie in eine Fläche 16 über, die mit der Fläche 21 wieder einen Winkel γ von ca. 20° bis ca. 120° einschließt.

Bei allen beschriebenen Ausführungsformen des Gegenmessers 3, 3' und 3'' wird der Bereich 20 der stumpfen Schneidkante vorzugsweise aus Hartmetall hergestellt, während die übrigen Teile aus einem anderen Metall gefertigt sein können. Allen gezeigten Ausführungsformen ist die Eigenschaft gemeinsam, daß sie die Standzeit der Schneidvorrichtung, deren Bestandteil sie sind, beträchtlich erhöhen. Das gewährleistet einen wirtschaftlicheren Einsatz der Schneidvorrichtung.

Grundsätzlich wäre es möglich, daß bei den in Rede stehenden Schneidvorrichtungen das Messer 2 längs seiner ganzen Schneidkante gleichzeitig mit dem Werkstück 4 in Kontakt kommt; vorteilhafter sind jedoch, wie bereits erwähnt, Schneidvorrichtungen, bei denen das Messer 2 scherenartig mit dem Gegenmesser zusammenwirkt, so daß sich diejenige Stelle, an der das Werkstück durchgeschnitten wird, längs des Messers bzw. Gegenmessers bewegt. Für solche Ausführungsformen wird empfohlen, die Fläche 8 bzw. 14 bzw. 16 des Gegenmessers parallel zur Bewegungsebene der Schneidkante des Messers 2 zu orientieren und in diese Bewegungsebene zu legen.

Wie besonders deutlich die Fig. 3 zeigt, kann das Gegenmesser im Schnitt senkrecht zu seiner Längserstreckung einen Teil eines Polygons bilden (dort mit den Flächen 11, 12, 13 und 14); die bei der Ausführungsform nach Fig. 4 vorgesehene konvexe Verrundung 17 kann nun als Teil eines Polygons mit unendlich vielen Ecken betrachtet werden, eine Betrachtungsweise, die deshalb von Bedeutung ist, weil hieraus ersichtlich wird, daß auch die Ausführungsform nach Fig. 4 dem Grundgedanken der erfindungsgemäßen Lehre entspricht, daß nämlich das Gegenmesser an seiner Schneidkante derart abgestumpft ist, daß es wenigstens drei jeweils unter Einschluß stumpfer Winkel aneinandergrenzende Flächen aufweist.

In den beigefügten Zeichnungen ist die Abstumpfung der Schneidkante des Gegenmessers nicht maßstabsgerecht dargestellt worden, um das Grundkonzept der Erfindung in den Zeichnungen gut erkennbar verdeutlichen zu können. Der abgestumpfte Bereich der Schneidkante des Gegenmessers darf nämlich - in der Draufsicht auf das Gegenmesser gesehen - nicht so breit sein, daß das auf der Fläche 6 bzw. 11 bzw. 21 aufliegende Werkstück 4 durch das sich absenkende Messer 2 in erheblichem Umfang nach unten gedrückt wird, ehe es durchschnitten wird. Außerdem muß bei gegenüber dem Gegenmesser scherenartig bewegtem Messer 2 verhindert werden, daß derjenige Bereich des Messers, welcher mit dem Werkstück und damit mit der Gegenschneide zunächst in Kontakt kommt, zu stark entgegen der Richtung des Pfeils F ausgelenkt wird.

Deshalb sollte die Breite des abgestumpften Bereichs des Gegenmessers - gesehen in der Draufsicht auf das Gegenmesser, d. h. gesehen in Richtung des Pfeils S - nicht größer als ca. 1 mm sein (dieses Maß wurde in Fig. 2 mit d, in Fig. 3 mit d' und in Fig. 4 mit d'' bezeichnet). Bevorzugt wird für diese Breite ein Bereich von ca. 0,02 mm bis ca. 0,5 mm, und als besonders vorteilhaft hat sich eine Breite d bzw. d' bzw. d'' von ca. 0,2 mm bis ca. 0,3 mm erwiesen.

Die Fig. 3 zeigt die besonders bevorzugte Ausführungsform, da sich diese auch leichter herstellen läßt als die Ausführungsform gemäß Fig. 4 mit ihrer Verrundung 17. Das Folgende gilt jedoch auch analog für die Ausführungsform nach Fig. 4.

Hartmetalle, wie sie vorteilhafterweise für die Schneidkante des erfindungsgemäßen Gegenmessers verwendet werden, können zwar einer hohen Druckbelastung widerstehen, eine Beanspruchung durch Zugkräfte ist jedoch soweit wie möglich zu vermeiden. Würde man bei dem in Figur 3 gezeigten Gegenmesser 3' die Fläche 13 nach oben und die Fläche 11 nach rechts verlängern, bis sie sich unter Bildung einer Kante schneiden, würde diese gedachte Kante (im Querschnitt) zwar noch einen stumpfen Winkel bilden, welcher aber einem Winkel von 90° schon recht nahe käme. Gemäß Figur 3 links von einer solchen gedachten Kante führen das auf das Werkstück 4 auftreffende Messer 2 und die dadurch vom Werkstück auf das Gegenmesser 3' ausgeübten Kräfte zu einer Zugbeanspruchung des Gegenmessers, welche umso größer ist, je kleiner der von der gedachten Kante (im Querschnitt) gebildete Winkel ist. Durch die bei der in Figur 3 dargestellten bevorzugten Ausführungsform vorgesehene weitere Abschrägung der Schneidkante durch die Fläche 12 werden nun solche unerwünschten Zugkräfte vermieden, die abgestumpfte Schneidkante des Gegenmessers 3' dadurch stabilisiert und ein Ausbrechen einer Hartmetall-Schneidkante bzw. ein Abplatzen von Hartmetall-Schneidkantenbereichen vermieden.

Durch die Neigung der dritten Fläche 13 gegenüber der Bewegungsebene der Schneidkante des Messers 2 wird schließlich mit Sicherheit verhindert, daß sich die Schneiden von Messer und Gegenmesser gegenseitig zerstören können. In diesem Zusammenhang sei auf den Stand der Technik verwiesen, bei dem ein Messer, wie das in Figur 1 dargestellte Messer 2, mit einem Gegenmesser zusammenwirkt, dessen Schneidkante von einer horizontalen Oberseite und einer vertikalen Vorderseite des Gegenmessers gebildet wird und im Querschnitt einen Winkel von 90° bildet. Trifft bei einer solchen bekannten Schneidvorrichtung das Messer 2 infolge einer auch nur geringfügig ungenauen Messerführung auf die horizontale Oberseite des Gegenmessers, ist eine Zerstörung beider Messer die Folge.

Schließlich sei noch darauf hingewiesen, daß es auch als unter die Erfindung fallend anzusehen ist, wenn in einer Schneidvorrichtung anstelle des Messers oder gleichzeitig mit dem Messer das Gegenmesser bewegt wird und/oder wenn auch die Schneidkante des Messers erfindungsgemäß ausgebildet ist.

Bei Verwendung von Hartmetall für die Schneide ist eine hohe Oberflächengüte des Hartmetalls von Vorteil.

## Patentansprüche

1. Schneidvorrichtung mit einem Gegenmesser aus Metall mit Schneidkante zum Schneiden flächiger Werkstücke, insbesondere Stahlkord, wobei die Schneidvorrichtung ein mit dem Gegenmesser unter Erzeugung einer Schneidkraft zusammenwirkendes, relativ zum Gegenmesser bewegliches Messer aus Metall mit Schneidkante umfaßt, wobei das Messer an seiner Schneidkante zwei unter einem Winkel aneinander angrenzende Flächen aufweist und wobei das Messer mit einer zur Schneidkraft quer verlaufenden Anpreßkraft zum Gegenmesser hingedrückt wird,
**dadurch gekennzeichnet,**
daß das Gegenmesser (3, 3', 3'') an seiner Schneidkante, gegen die das Messer (2) von der querverlaufenden Anpreßkraft (F) hingedrückt wird, derart abgestumpft ist, daß es wenigstens drei jeweils unter Einschluß stumpfer Winkel (α, β) aneinandergrenzende Flächen (6, 7, 8) aufweist.

2. Schneidvorrichtung nach Anspruch 1, dadurch gekennzeichnet, daß das Gegenmesser an seiner Schneidkante verrundet ist (17).

3. Schneidvorrichtung nach Anspruch 1, dadurch gekennzeichnet, daß das Gegenmesser im Bereich (20) seiner stumpfen Schneidkante aus Hartmetall besteht.

4. Schneidvorrichtung nach Anspruch 1, dadurch gekennzeichnet, daß bei Vorliegen von drei aneinandergrenzenden Flächen (6, 7, 8) an der Schneidkante des Gegenmessers (3), der Winkel (β) zwischen den beiden vom Werkstück (4) entfernt liegenden Flächen (7, 8) einen Wert von ca. 100° bis ca. 180° aufweist.

5. Schneidvorrichtung nach einem der Ansprüche 1 bis 4, dadurch gekennzeichnet, daß eine dem Werkstück (4) direkt gegenüberliegende erste Fläche (6; 11; 21) des Gegenmessers (3, 3', 3'') mit einer vom Werkstück (4) am weitesten entfernt angeordneten weiteren Fläche (8, 14, 16) einen Winkel (γ) von ca. 20° bis ca. 120° einschließt.

6. Schneidvorrichtung nach Anspruch 5, dadurch gekennzeichnet, daß das Gegenmesser (3) im Bereich seiner Schneidkante (20) vier aneinandergrenzende Flächen (11, 12, 13, 14) aufweist, wobei die an die erste Fläche (11) angrenzende zweite Fläche (12) mit einer zur weiteren Fläche (14) parallelen Fläche (15) einen Winkel (δ) von ca. 2° bis ca. 85° bildet und wobei die dritte, an die weitere Fläche (14) angrenzende Fläche (13) einen Winkel (ε) im Bereich von ca. 0° bis ca. 70° mit der zur weiteren Fläche (14) parallelen Fläche (15) bildet.

7. Schneidvorrichtung nach einem oder mehreren der vorstehenden Ansprüche, dadurch gekennzeichnet, daß - in Bewegungsrichtung (S) des Messers (2) gesehen sowie quer zur Längsrichtung der Schneidkante gemessen - die Breite (d; d'; d'') des abgestumpften Bereichs (7; 12, 13; 17) des Gegenmessers höchstens ca. 1 mm beträgt.

8. Schneidvorrichtung nach Anspruch 7, dadurch gekennzeichnet, daß die Breite des abgestumpften Bereichs des Gegenmessers ca. 0,02 mm bis ca. 0,5 mm beträgt.

## Claims

1. A cutting device having a counter-blade made of metal with a cutting edge for cutting flat workpieces, in particular steel cord, with the cutting device including a blade made of metal, with cutting edge, interacting with the counter-blade by producing a cutting force and movable relative to the counter-blade, with the blade, at its cutting edge, having two faces adjacent to one another at an angle and with the blade being pressed towards the counter-blade with a contact pressure acting transversally to the cutting force,
**characterized in that** the counter-blade (3, 3', 3'') is blunted at its cutting edge, against which the blade (2) is pressed by the transversally acting contact pressure (F), so that it has at least three faces (6, 7, 8) adjacent to one another whilst enclosing obtuse angles (α, β).

2. A cutting device according to Claim 1,
**characterized in that** the counter-blade is rounded (17) at its cutting edge.

3. A cutting device according to Claim 1,
**characterized in that** the counter-blade is made of hard metal in the region (20) of its blunt cutting edge.

4. A cutting device according to Claim 1,
**characterized in that** with the presence of three adjacent faces (6, 7, 9) at the cutting edge of the counter-blade (3), the angle (β) between the two faces (7, 8) lying distant from the workpiece (4) have a value of roughly 100° to roughly 180°.

5. A cutting device according to one of Claims 1 to 4,
**characterised in that** a first face (6; 11; 21) of the counter-blade (3, 3', 3'') lying directly opposite the workpiece (4) encloses an angle (τ) of roughly 20° to roughly 120° with a further face (8, 14, 16) disposed the furthest away from the workpiece (4).

6. A cutting device according to Claim 5,
**characterized in that** the counter-blade (3) has four adjacent faces (11, 12, 13, 14) in the region of its cutting edge (20), with the second face (12) adjacent to the first face (11) forming an angle (δ) of roughly 2° to roughly 85° with a face (15) parallel to the further face (14) and with the third face (13) adjacent to the further face (14) forming an angle (ε) in the range of roughly 0° to roughly 70° with the face (15) parallel to the further face (14).

7. A cutting device according to one or more of the preceding Claims,
**characterised in that** - seen in the direction of movement of the blade (2) and also measured transversally to the longitudinal direction of the cutting edge - the width (d; d'; d'') of the blunted region (7; 12, 13; 17) of the counter-blade is at most roughly 1 mm.

8. A cutting device according to Claim 7,
**characterized in that** the width of the blunted region of the counter-blade is roughly 0.02 mm to roughly 0.5 mm.

## Revendications

1. Dispositif de coupe avec une contre-lame en métal pourvue d'un tranchant pour couper des pièces planes, notamment une carcasse métallique de pneumatique, le dispositif de coupe comprenant une lame en métal, pourvue d'un tranchant, mobile par rapport à la contre-lame et coopérant avec cette dernière pour produire une force de coupe, la lame présentant sur son tranchant deux faces qui se rejoignent selon un angle, et la lame étant poussée vers la contre-lame avec une force de pression d'application orientée transversalement à la force de coupe, caractérisé en ce que la contre-lame (3, 3', 3'') est, sur son tranchant vers lequel la lame (2) est poussée par la force de pression d'application (F) dirigée transversalement, épointée de telle sorte qu'elle présente au moins trois faces (6, 7, 8) se rejoignant respectivement en formant un angle obtus (α, ).

2. Dispositif de coupe selon la revendication 1, caractérisé en ce que la contre-lame est arrondie (17) sur son tranchant.

3. Dispositif de coupe selon la revendication 1, caractérisé en ce que la contre-lame est réalisée en métal dur dans la région (20) de son tranchant épointé.

4. Dispositif de coupe selon la revendication 1, caractérisé en ce qu'en présence de trois faces limitrophes (6, 7, 8) sur le tranchant de la contre-lame (3), l'angle (β) entre les deux faces (7, 8) éloignées de la pièce travaillée (4) présente une valeur d'environ 100° à environ 180°.

5. Dispositif de coupe selon l'une quelconque des revendications 1 à 4, caractérisé en ce qu'une première face (6 ; 11 ; 21) de la contre-lame (3 ; 3' ; 3''), directement opposée à la pièce travaillée (4), forme avec la face (8, 14, 16) qui est la plus éloignée de la pièce travaillée (4) un angle (γ) d'environ 20° à environ 120°.

6. Dispositif de coupe selon la revendication 5, caractérisé en ce que la contre-lame (3) présente quatre faces limitrophes (11, 12, 13, 14) dans la région de son tranchant (20), la deuxième face (12), limitrophe de la première face (11), formant avec une face (15) parallèle à la face plus éloignée (14) un angle (δ) d'environ 2° à environ 85°, et la troisième face (13), limitrophe de la face plus éloignée (14), formant avec cette face (15) parallèle à la face plus éloignée (14) un angle (ε) compris entre environ 0° et environ 70°.

7. Dispositif de coupe selon une ou plusieurs des revendications précédentes, caractérisé en ce que, considérée dans la direction de déplacement (S) de la lame (2) et mesurée transversalement à la direction longitudinale du tranchant, la largeur (d ; d' ; d'') de la région épointée (7 ; 12, 13 ; 17) de la contre-lame est au plus égale à environ 1 mm.

8. Dispositif de coupe selon la revendication 7, caractérisé en ce que la largeur de la région épointée de la contre-lame est comprise entre environ 0,02 mm et environ 0,5 mm.
